# EUROPEAN PATENT SPECIFICATION

(11) **EP 0 370 291 B1**
(45) Date of publication and mention of the grant of the patent: **08.03.1995**
(21) Application number: 89120397.8
(22) Date of filing: 03.11.1989
(51) Int. Cl.: H04L 7/04, H04J 3/06, H04N 7/32

(54) **System and devices for transmitting signals consisting of data blocks**
System und Anordnung zur Übertragung von aus Datenblöcken bestehenden Signalen
Système et dispositif pour la transmission de signaux composés de blocs de données

(30) Priority: 23.11.1988 IT 2270288
(43) Date of publication of application: 30.05.1990
(73) Proprietor: ALCATEL ITALIA Società per Azioni, 20149 Milano (IT)
(72) Inventor: Cucchi, Silvio, I-20093 Gaggiano (MI) (IT)
(74) Representative: Strehl Schübel-Hopf Groening & Partner

(56) References cited:
- EP-A- 0 165 619
- EP-A- 0 229 738
- WO-A-84/02242
- PATENT ABSTRACTS OF JAPAN, vol. 7, no. 233 (E-204)[1378], 15th October 1983; & JP-A-58 123 261 (MITSUBISHI DENKI K.K.) 22-07-1983

## Description

The invention relates to a method and apparatus for transmitting digital signals including data blocks, each of the blocks being delimited by one of a number of possible words (DDi) that are introduced in the transmission side and are reconstructed in reception, the blocks being located in transmission according to an enumeration that must be reconstructable in reception according to the received composite signal, even in the case in which transmission line errors can cause with one another or can the data block delimiting words to destroy some of these words and/or introduce untransmitted delimiting words.

Many applications of numerical transmission require the transmission of data blocks, these blocks being disposed according to an ordered succession (e.g. according to the integer ciphers 0,1,2,3 ...) and this ordering must be stored and recognized in the reception side, even in the presence of errors in the data transmission.

Many applications require data blocks that have a randomly variable dimension (bit number) and that the single data of each block are coded with a variable length, e.g. by Hoffman's codes; the delimiting of data blocks uses some well-known techniques, such as the use of synchronization words or the use of data block delimiting words (in the following these words are indicated shortly as DDi, with i being the integer cipher 0,1,2,.... i.... n-1, n).

The synchronization words have the drawback of having a high bit number for avoiding their interpretation as words or word sequences of data blocks in the presence of transmission errors. Therefore, a synchronization word is used for a certain number of data blocks, and further, if necessary, the length information (expressed in bit number) of the blocks that follow the synchronization word is sent into the transmission line.

In the case of use of DDi words, these words are located at the end of each data block, and when more than one DDi word is used, the various DDi words are used so that it is possible to recognize, in addition to the limit of data blocks, the grouping limits of data blocks. For a better explanation of the problem, reference is made to video signal coding by the use of discrete cosine transforms (DCT).

Considering the sole luminance signal and considering the video signal in digital form, the points of a semiframe are grouped in square blocks of 8x8 points; the DCT transform is applied to each square block of points and the resulting values are coded in a variable length after a precision reduction. For separating the data related to each initial block of 8x8 image points, DD words can be used in addition to some information that identifies the first 8x8 block in each semiframe.

On the reception side, the 8x8 blocks of reconstructed image data must be reallocated in their proper positions in the video signal semiframe. Errors on the transmission line (or residual uncorrected errors, when the transmitted data are protected by error correction codes) can have the effect of destroying some DD words or transforming some data related to the points of 8x8 blocks into DD words, thus making impossible the reconstruction of the data blocks near the lost or erroneously created DD words, and also the proper allocation in the image of 8x8 blocks following the erroneously separated blocks.

The above mentioned drawback can be overcome by sufficient protection of the synchronization words located at the start of the video semiframe and by using more than one DD word, so that a DD0 word is used at the end of each data block, while a DD1 word replaces the DD0 word every four data blocks, and so on. Greater detail on the use of DD words can be found, e.g., in the article of S. Cucchi and F. Molo entitled: "DCT Based Video Codec for DS3 Digital transmission" presented at the SMPTE Technical Conference, 14-19 October 1988. This system is advantageous in many ways, but further improvement is desirable.

The object of the present invention is to obtain a more certain recovery, in the presence of transmission errors, of the correct ordering of data blocks, separated in transmission by DD words.

The present invention is defined by the claims.

The transmission of digital signals consisting of data blocks, each delimited by one among several possible words (DDi) and enumerated in transmission by enumeration reconstructable in reception even in the presence of transmission errors, includes the transmission of a pseudo-random sequence, that assumes e.g. values of 0 or 1, which values are correlated with two data block delimiting words named respectively DD0 and DD1. At the reception side, two pseudo-random sequences are formed, one sequence being supplied by a local generator and identical to the transmission sequence, the other sequence being reconstructed according to the revealed data delimiting words. The comparison between the two pseudo-random sequences obtained in this manner in reception provides, after an initial synchronization operation, the verification of the correct interpretation of the received data block delimiting words and, in case of interpretation errors, the application of suitable re-synchronization actions for recovering the correct enumeration of received data blocks.

The invention foresees the use of two DD words, indicated in the following by DD0 and DD1, that can be made to correspond to the bit 0 and bit 1 respectively; further, on the data transmission side, there is provided a generator of a pseudo-random sequence of appropriate length, the sequence being formed by a succession of bit 0 and bit 1. The pseudo-random sequence is re-initialized at prefixed times and the relevant flow emitted (1 or 0) is made to advance by one bit at each data block end. If the above mentioned bit is 0, a DD0 word is inserted at the end of the data block; alternatively, a DD1 word is inserted at the end of the data block if the emitted bit is 1. On the reception side, in the absence of errors, the DDi words (i= 0,1) are recognized and, utilizing the correspondences DD0 → 0 and DD1 → 1, a suitable number of bits is accumulated in a shift register, the data being advanced as each new DDi word is received.

The reception side also includes a generator that generates the same pseudo-random sequence used in the transmission side and is synchronized (e.g. in the initial transmission phase) with the frequency used in the transmission side employing a sufficient decoded DDi data number. After the initial synchronization phase, the generator of the reception side is advanced by one position (bit) for each received DDi word and the bits output are sent to a second shift register having a capacity approximately equal to the one that holds the bits 0 and 1 corresponding to the received DD0 and DD1 words. Now, at each advance of one bit of data included in the two shift registers, it can be verified whether the received DDi words are exact or whether some errors have occurred, and this verification is made using the characteristics of the pseudo-random sequences. These characteristics are described e.g. in the article "Pseudo-Random Sequences and Arrays" by F.J. Mc Williams, N.J.A. Sloane, published in The Proceedings of the IEEE, December 1976, pages 1715-1729, where the pseudo-random sequences of the more simple type are described and they are generated by a shift register supplied with feedback connections. Considering these sequences, if n is the number of memories of the register, the pseudo-random sequence generated has a length 2ⁿ-1. The particular characteristics of these sequences, as regards the present invention, are the characteristic of the window and the characteristic of the correlations among the sequences generated that are in-phase with one another or out-of-phase by one or more bits. The error types that can occur in the two DD0 and DD1 words are of three types, that is: one or more errors in the bits of the DDi words can exchange a word into another word, namely, e.g. the DD0 word instead of the DD1 word in reception; a second error possibility is that a DDi word is changed in a different word unrecognizable in reception as a DDi word; and, finally, as a third possibility, errors in the words that represent the data in data blocks can change these words or parts of these words into DDi words.

The advantages of the present invention with respect to known methods to assure data block synchronization between transmission and reception are in particular:
1) by storing in reception at least n bits (corresponding to the DD0 and DD1 words) for a pseudo-random sequence having a length 2ⁿ-1, any point of the sequence can be recognized (characteristic of the window of pseudo-random sequences);
2) in the case of exchange among DD0 and DD1 words, the error can be corrected;
3) in the case of creation or destruction of DDi words in a limited number, typically two created or destroyed words, which are relatively near one another, the error type can be recognized and the synchronization between the data blocks in transmission and reception can be recovered, although the information related to the data blocks for the lost words is not recoverable;
4) no further synchronization of data is necessary if, for significant groups of data blocks, the two generators of pseudo-random sequence in transmission and reception are repositioned on the initial start position. For example, in the case of transmission of television signals, synchronization can be made at the start of each television frame.

The various characteristics and advantages of the present invention are explained in a better manner in the following description by means of a preferred (not limitative) embodiment, represented in the drawings, in which :
Figure 1 indicates the structure for the insertion of the data block delimiting words by the use of a pseudo-random sequence on the transmission side;
Figure 2 shows the structure on the reception side suitable for recognizing the error types in the data block delimiting words; and
Figure 3 indicates the structure of the pseudo-random sequences on the reception side, the frequency generated locally and the frequency recognized by the data delimiting words, as they are recognized in reception and in the case of transmission errors.

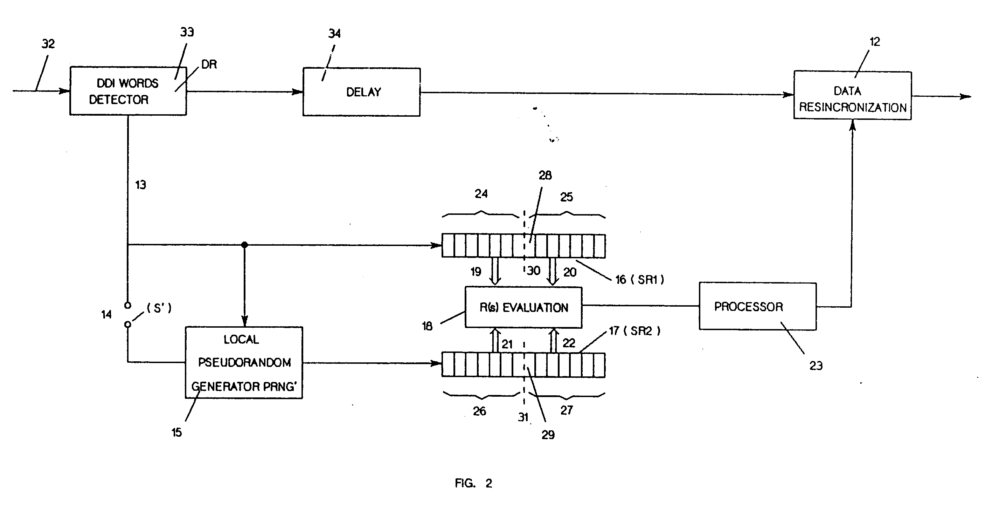

With reference to Figure 1, the source 1 (SDB) emits data blocks sent by the output wire 6; the generator 3 of pseudo-random sequence (PRNG) is advanced by one bit position at the end of each data block emitted by the generator 1 and the output 5 of this generator 3 selects, by the switch 4 (S=switch), the DD0 word at the output 7 if the bit at the output from the generator 3 is equal to 0, or the output 8 if the bit at the output from the generator 3 is equal to 1. The source 1, through a control emitted on the connection 9, causes the advance of both generator 3 and a generator 2 (WG) that provides the words DD0 and DD1 respectively at the outputs 7 and 8. The DDi word selected by the switch 4 (S) is sent into the inserter 10 (I) that provides the insertion of the word DDi at the end of the data block to which this word pertains. The data blocks with related DDi words are emitted at the output 11.

In Figure 2, relating to the reception device, the data emitted at the output 11 of Figure 1 arrive at the input 32 of a data detector 33 (DR) that recognizes the DDi words, and if they are correctly received, transforms them into bits 0 or 1 according to the same convention used on the transmission side, these binary values being emitted on the wire 13. The local source 15 (PRNG′) emits the same pseudo-random se-quence emitted by the generator 3 (PRNG) in transmission (Figure 1); the source 15 is synchronized, in an initial phase, by sending to it an adequate number of bits emitted by the detector 33 on the wire 13; this is done by closing the switch 14 (S′). For example, for the pseudo-random binary sequence having a length 2ⁿ-1, n bits that enter into the source 15 are sufficient for its synchronization. The local source 15 is then made to advance by 1 bit at each DD1 signal recognized by the block 33, that is schematically indicated in Fig. 2 by the coupling of wire 13 into the generator 15. The binary data coming out of the detector 33 and source 15 are sent respectively into the storing means e.g. shift registers 16 (SR1) and 17 (SR2), where the data advance one bit position, for each bit emitted by the wire 13. In a preferred embodiment of the invention, the shift registers 16 and 17 are each divided in two parts and each part includes a number of bits slightly higher than n for the sequence of length 2ⁿ-1. The two parts 24 and 25 of the register 16 are subdivided by the line 30 and the two parts 26 and 27 of the register 17 are subdivided by the line 31.

The error detecting actions and the following correction actions are carried out when a data error is revealed by the positions 28 and 29 of the parts of registers 16 and 17, indicated respectively by 25 and 27. This requires, before making any corrective actions, accumulating a suitable number of binary data in the two registers. As these corrective actions involve the rejection of some data blocks or the introduction of dummy data blocks, the data blocks subdivided in this manner by the DDi words revealed in the block 33 are delayed by the delay element 34.

By means of the connections 19, 20, 21, 22 the binary data of the registers 16 and 17 are transmitted into the block 18 where the correlation values R(s) are calculated for some values of "s" starting from 0. These values are processed in the processor 23 that establishes the corrective actions. The corrective actions are made by the re-synchronizator 12 of data blocks.

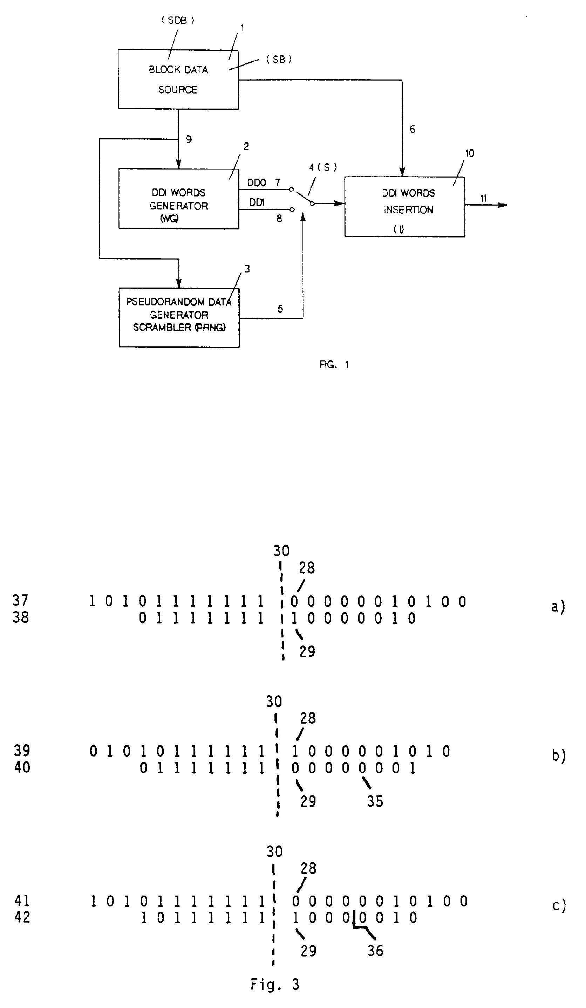

The use of correlations among the binary sequences, with the aim of detecting the errors on DDi words, is explained with reference to Figure 3, where, as an example, a binary sequence having a length 127 or 2⁷-1 (therefore with exponent n equal to 7) is used, and generated by the primitive polynomial: x⁷ + x + 1. On lines 37, 39, 41 there is indicated at a certain instant the contents of the register 17 related to the local source for three different error types, while on lines 38, 40, 42 there is indicated the similar contents of the register 16 related to the revealed DDi words. In the three cases the line 30 subdivides each one of the conditions of registers into an equal number of bits.

In the absence of errors, the correlation R(0) calculated on the 8 bits on the right side of the line 30 assumes the value 8 because the contents of the registers 16 and 17 are equal in these positions (the correlations are calculated as usually as the addition of the products transforming the bit 1 into -1 and the bit 0 into 1). In the case where one error occurred in which the DD0 word is transformed into the DD1 word, this error, during the progress of the register 16 is transformed into the bit 1, as indicated by 29 in Figure 3a, the bits being corrected at preceding times (on the right side of the bit 29) and in future times. Then, by computing R(0), the correlation of zero order between the lines 37 and 38 and relative to the 8 bits on the right side of the separating line 30, and R′(0), the similar correlation relative to the 8 bits on the left side of the demarcation 30, the result R(0) = 6 and R′(0) = 8 is obtained, which identifies the error type and the relevant position.

In Figure 3b), it is assumed that an error has occurred which has transformed a word belonging to the data into the DD0 word; this is indicated by the insertion of the zero 35 in line 40. As this zero value was really inserted, owing to the error, into the inside of a zero sequence, this error is detected by a value of R(0), as indicated previously, being lower than the value 8 only when, during the advance of the shift registers, the value 1 appears in position 28 on line 39 of Figure 3b). Owing to this error, there occurs R(0)<8, but also R′(0) is lower than the value 8. Conversely, the value of R′(+1), or the correlation of order 1 among the eight bits on the left side of the division line 30, becomes equal to 8, with the 8 bits of the line being considered dephased on the right side of the line 30.

This is sufficient for establishing that a DD0 value was introduced, even if its position is unknown in the succession of seven values 0 on the right side of the line 30. In any case, it is possible to re-synchronize the system and take measures for eliminating the data blocks whose values are to be considered affected by possible error. In Figure 3c), a condition is shown in which a DD0 value was lost in the position 36. In this case, when the first value 1 of the line sequence 42 enters into the position 29, there results R(0)<8; in this case, R′(-1) = 8, i.e. a condition similar to the one illustrated in Figure 3b).

Until now, the cases examined involved a sole error in the bits contained at a certain instant in the register 16 of the reception side. This represents the more frequent type of error. However, in the case that 2 or 3 errors occur in the whole range of bits contained in the register 16, at the moment in which R(0)<8, it does not occur that R(+1) or R(-1) has the value 8; similarly, R˝(0), R˝(±1), R˝(±2), R˝(±3), involving all bits of the registers 16 and 17. By letting the two registers 16 and 17 advance by a suitable number of steps (with the data of the example it can be e.g. 20 bits), one of the two above-mentioned correction values may become correct (or with the value 16); from this it occurs that the sequences of the registers 16 and 17 are correct but dephased by a certain number of bits (e.g. by 3 bits in advance or in delay, if one of the two values R(±3) is equal to 16). In this case, it is generally possible to achieve resynchronization of the received data blocks. If the resynchronization does not occur within a prefixed number of binary elements entered into the shift registers, the system can be re-synchronized by closing the switch 14 in Figure 2.

The above example is presented with the aim of explaining better the main concept of the invention; obviously the skilled technician of this field can develop the main concept of the present invention, applying some variants. A possible variant can be introduced for avoiding loss of a great number of data blocks when the pseudo-random sequence shows long sequences of values equal to one or zero ciphers. This is illustrated in Figure 3. When a DD0 (represented by the value 0) is inserted or destroyed in a zero sequence and a similar action occurs for DD1, all blocks delimited by the values DDO=0 contained in this sequence are lost if it is considerd the right reconstruction of the received data. With this aim, it is possible to use, for example, the pseudo-random sequences generated by two shift registers, the first of which generates a relatively short sequence (where the configurations with many zero or one ciphers in sequence are short) and the second generates a very long sequence. The short pseudo-random sequence, having a period f (that is repeated cyclically with frequency f) is used with correct and negated bits and this is made according to the bits coming out from the second pseudo-random sequence, these bits being emitted now at the rate f. For example, if it is desired to generate a sequence having a length of about 16,000, this can be obtained by the shift register of 14 bits generating a sequence of length 2¹⁴-1 = 16,383, where sequence of following zeros of any length until the length of 13 are present. Alternatively, using two shift registers, one of 4 bits (in which, if desired, the configuration provides 4 following zero ciphers) and a second register of 10 bits, there can be obtained a sequence of length 16x1023 = 16,368 in which the sequences of one or zero ciphers are represented with a maximum length of 4 ciphers. In this way, the initial synchronization phase of the receiver is lengthened, but this is generally of little importance.

Obviously the invention has been described for clarity's sake with reference to the drawings and examples, but the invention is not limited to these embodiments as it is susceptible of changes and modifications which, being within the reach of the person ordinarily skilled in the art, fall naturally within the scope of the following claims.

## Claims

1. A method for the transmission of digital signals including data blocks, each of the data blocks being delimited by a respective word of a number of possible words (DDi, where i is an integer), which is introduced at the transmission side and is recognised at the reception side, the data blocks being located in transmission according to an order that must be reconstructable in reception from the digital signals received, even when transmission line errors introduce one or more untransmitted data block delimiting words and/or destroy one or more of the transmitted data block delimiting words, the method characterised by:
at the transmission side,
(a) generating a sequence of pseudo-random symbols, the symbols having a periodicity equal to the occurrence period of the delimited data blocks, each symbol of the sequence being selected among 'q' possible symbols;
(b) correlating q words delimiting the data blocks with said q symbols which are emitted in the pseudo-random sequence;
(c) advancing by one step the sequence of pseudo-random symbols, each time a new data block is transmitted;
(d) for each advance, supplying a symbol which indicates the word to be used for delimiting said new data block; and at the reception side,
(e) locally generating the same pseudo-random sequence of symbols as is generated at the transmission side;
(f) advancing by one step the sequence of symbols, each time a word delimiting a data block is detected in the received digital signals;
(g) recognizing and transforming each data block delimiting word into the corresponding symbol of a pseudo-random sequence, thus forming a sequence of symbols which, in the absence of errors, is equal to the pseudo-random sequence locally generated at the reception side;
(h) storing a first series of symbols comprising an adequate number of symbols of the said pseudo-random sequence, as generated in step (e);
(i) storing a second series of symbols comprising an adequate number of symbols associated with the data block delimiting words, as obtained in step (g);
(j) comparing the symbols of steps (h) and (i);
(k) detecting possible lacks of coincidence between the symbols of the first and second series;
(l) calculating correlations of symbols of the first and second series, to determine an error type; and
(m) recovering the order of the data blocks at the transmission side in accordance with the error type determined in step (1).

2. A method according to claim 1, wherein:
the pseudo-random sequence generated at the transmission side and at the reception side is of the binary type, that is consists of the symbols 0 and 1;
two words (DD0, DD1) delimiting the data blocks are correlated respectively with the symbol 0 and the symbol 1; and
each delimiting word is inserted, in transmission, at the end of a data block.

3. Digital signal transmission apparatus adapted to perform steps (a) to (d) of the method of claim 1 or claim 2, the apparatus comprising:
a source (1) of said digital signals including data blocks;
a generator (3) for generating said sequence of pseudo-random signals of step (a);
a source (2) of said words delimiting the data blocks; and
a switch (4) and an inserter (10), to produce an output signal (11) for transmission, in which a respective delimiting word is inserted for each data block, according to the symbols supplied by the generator (3).

4. Digital signal reception apparatus adapted to perform steps (e) to (m) of the method of claim 1 or claim 2, the apparatus comprising:
a detector (33) for recognising and separating from the received digital signals the respective word delimiting each data block, and for converting each separated word into a symbol of the sequence of step (g);
a generator (15) for generating the pseudo-random sequence of step (e);
first storage means (16) for storing the sequence of symbols output by said detector (33), in accordance with step (i) ;
second storage means (17) for storing the sequence of symbols output by said generator (15), in accordance with step (h);
a correlator (18) which calculates the correlations of step (1) according to the contents of said first (16) and second (17) storage means, to determine an error type; and
means (12, 23) for re-synchronizing the data blocks in the order thereof in transmission, in accordance with the error type determined by said correlator (18).

## Patentansprüche

1. Verfahren zum Übertragen von digitalen Signalen, die Datenblöcke enthalten, von denen jeder durch ein jeweiliges Wort aus einer Anzahl möglicher Wörter (DDi, wobei i eine ganze Zahl ist) abgegrenzt wird, das auf der Sendeseite eingesetzt und auf der Empfangsseite erkannt wird, wobei die Datenblöcke beim Senden mit einer Reihenfolge angeordnet werden, die beim Empfang aus den empfangenen digitalen Signalen selbst dann wiederherstellbar sein muß, wenn Übertragungsleitungsfehler ein nicht übertragenes Datenblock-Abgrenzungswort oder mehrere einfügen und/oder ein übertragenes Datenblock-Abgrenzungswort oder mehrere zerstören;
**gekennzeichnet durch**
- auf der Sendeseite:
(a) eine Folge von Pseudozufallssymbolen erzeugt wird, die eine Periodizität aufweisen, die der Periode des Auftretens der abgegrenzten Datenblöcke entspricht, wobei jedes Symbol der Folge unter "q" möglichen Symbolen ausgewählt ist;
(b) Korrelieren von q die Datenblöcke abgrenzenden Wörtern mit den in der Pseudozufallsfolge ausgesandten q Symbolen;
(c) Vorwärtsschieben der Folge von Pseudozufallssymbolen um einen Schritt jedesmal dann, wenn ein neuer Datenblock gesendet wird;
(d) Zuführen eines Symbols, für jedes Vorwärtsschieben, das das zum Abgrenzen des neuen Datenblocks zu verwendende Wort anzeigt; und
- auf der Empfangsseite:
(e) örtliches Erzeugen derselben Pseudozufallsfolge von Symbolen, wie sie auf der Sendeseite erzeugt wird;
(f) Vorwärtsschieben der Folge von Symbolen um einen Schritt jedesmal dann, wenn ein einen Datenblock abgrenzendes Wort in den empfangenen digitalen Signalen erfaßt wird;
(g) Erkennen und Umformen jedes Datenblock-Abgrenzungsworts in das entsprechende Symbol einer Pseudozufallsfolge, um dadurch eine Folge von Symbolen zu erzeugen, die beim Fehlen von Fehlern mit der auf der Empfangsseite örtlich erzeugten Pseudozufallsfolge übereinstimmt;
(h) Abspeichern einer ersten Reihe von Symbolen, die eine entsprechende Anzahl von Symbolen der genannten Pseudozufallsfolge, wie im Schritt (e) erzeugt, umfaßt;
(i) Abspeichern einer zweiten Folge von Symbolen, die eine entsprechende Anzahl von den Datenblock-Abgrenzungswörtern zugeordneten Symbolen, wie im Schritt (g) erhalten, umfaßt;
(j) Vergleichen der Symbole aus den Schritten (h) und (i);
(k) Erfassen möglicher fehlender Übereinstimmungen zwischen den Symbolen in der ersten und zweiten Reihe;
(l) Rechnen von Korrelationen für die Symbole aus der ersten und zweiten Reihe, um den Fehlertyp zu bestimmen; und
(m) Wiederherstellen der Reihenfolge der Datenblöcke auf der Sendeseite abhängig von dem im Schritt (1) bestimmten Fehlertyp.

2. Verfahren nach Anspruch 1, bei dem:
- die auf der Sendeseite und der Empfangsseite erzeugte Pseudozufallsfolge vom Binärtyp ist, d.h. aus den Symbolen 0 und 1 besteht;
- zwei die Datneblöcke abgrenzende Wörter (DD0, DD1) jeweils dem Symbol 0 und dem Symbol 1 zugeordnet sind; und
- jedes Abgrenzungswort beim Senden am Ende eines Datenblocks eingefügt wird.

3. Vorrichtung zum Senden digitaler Signale, die so ausgebildet ist, daß sie die Schritte (a) bis (d) des Verfahrens von Anspruch 1 oder Anspruch 2 ausführt, mit:
- einer Quelle (1) für die Datenblöcke enthaltenden digitalen Signale;
- einem Generator (3) zum Erzeugen der Folge von Pseudozufallssignalen beim Schritt (a);
- einer Quelle (2) für die die Datenblöcke abgrenzenden Wörter; und
- einem Schalter (4) und einer Einfügeeinrichtung (10), um ein Ausgangssignal (11) für den Sendevorgang zu erzeugen, in dem ein jeweiliges abgrenzendes Wort für jeden Datenblock abhängig von den vom Generator (3) zugeführten Symbolen eingefügt wird.

4. Gerät zum Empfangen digitaler Signale, das so ausgebildet ist, daß es die Schritte (e) bis (m) des Verfahrens von Anspruch 1 oder Anspruch 2 ausführt, mit:
- einem Detektor (33) zum Erkennen und Abtrennen des jeden Datenblock abgrenzenden jeweiligen Worts aus den empfangenen digitalen Signalen, und zum Umwandeln jedes abgetrennten Worts in ein Symbol der Folge gemäß Schritt (g);
- einem Generator (15) zum Erzeugen der Pseudozufallsfolge von Schritt (e);
- einer ersten Speichereinrichtung (16) zum Abspeichern der vom Detektor (13) ausgegebenen Symbolfolge gemäß Schritt (i);
- einer zweiten Speichereinrichtung (17) zum Abspeichern der vom Generator (15) ausgegebenen Symbolfolge gemäß Schritt (h);
- einer Korreliereinrichtung (18), die die Korrelationen des Schritts (l) abhängig von den Inhalten der ersten (16) und zweiten (17) Speichereinrichtung berechnet, um den Fehlertyp zu bestimmen; und
- einer Einrichtung (12, 13) zum Neusynchronisieren der Datenblöcke in deren Reihenfolge beim Senden abhängig von dem von der Korreliereinrichtung (18) bestimmten Fehlertyp.

## Revendications

1. Procédé de transmission de signaux numériques comprenant des blocs de données, chacun des blocs de données étant délimité par un mot respectif d'une pluralité de mots possibles (DDi, où i est un entier), qui est introduit côté émission et est reconnu côté réception, les blocs de données étant disposés à l'émission selon un ordre qui doit pouvoir être reconstitué à la réception à partir des signaux numériques reçus, même lorsque des erreurs de ligne de transmission introduisent un ou plusieurs mots délimitant un bloc de données non transmis et/ou détruisent un ou plusieurs des mots délimitant un bloc de données transmis, procédé caractérisé par :
côté émission,
(a) la génération d'une séquence de symboles pseudo-aléatoire, les symboles ayant une périodicité égale à la période d'apparition des blocs de données délimités, chaque symbole de la séquence étant choisi parmi "q" symboles possibles ;
(b) la corrélation de q mots délimitant les blocs de données avec lesdits q symboles qui sont émis dans la séquence pseudo-aléatoire ;
c) l'avancement d'un échelon de la séquence de symboles pseudo-aléatoires, chaque fois qu'un nouveau bloc de données est transmis ;
d) pour chaque avancement, la délivrance d'un symbole indiquant le mot à utiliser pour délimiter ledit nouveau bloc de données ; et
côté réception,
(e) la génération localement de la même séquence pseudo- aléatoire de symboles telle qu'elle est générée côté émission ;
(f) la progression d'un échelon de la séquence de symboles, chaque fois qu'un mot délimitant un bloc de données est détecté dans les signaux numériques reçus ;
(g) la reconnaissance et la transformation de chaque mot délimitant un bloc de données en symboles correspondants d'une séquence pseudo-aléatoire en formant ainsi une séquence de symboles qui, en l'absence d'erreurs, est identique à la séquence pseudo-aléatoire générée localement côté réception ;
(h) la mémorisation d'une première série de symboles comportant un nombre approprié de symboles de ladite séquence pseudo-aléatoire, telle que générée au cours de l'étape (e) ;
(i) la mémorisation d'une seconde série de symboles comportant un nombre approprié de symboles associés auxdits mots délimitant le bloc de données, telle qu'obtenue au cours de l'étape (g) ;
(j) la comparaison des symboles des étapes (h) et (i);
(k) la détection de manques éventuels de coïncidences entre les symboles des première et seconde séries ;
(l) le calcul de corrélations de symboles des première et seconde séries, pour déterminer un type d'erreur ; et
(m) la récupération de l'ordre des blocs de données côté émission conformément au type d'erreur déterminé au cours de l'étape (l).

2. Procédé selon la revendication 1, dans lequel:
la séquence pseudo-aléatoire générée côté émission et côté réception est du type binaire, c'est-à-dire consiste en symboles 0 et 1;
deux mots (DD0, DD1) délimitant les blocs de données sont corrélés respectivement avec le symboles 0 et le symbole 1 ; et
chaque mot de délimitation est inséré, à l'émission, à la fin d'un bloc de données.

3. Dispositif de transmission de signaux numériques conçu pour exécuter les étapes (a) à (d) du procédé de la revendication 1 ou de la revendication 2, dispositif comportant :
une source (1) desdits signaux numériques comprenant des blocs de données ;
un générateur (3) pour générer ladite séquence de signaux pseudo-aléatoire de l'étape (a) ;
une source (2) desdits mots délimitant lesdits blocs de données ; et
un commutateur (4) et un circuit d'insertion (10), pour produire de signal de sortie (11) pour une transmission, dans lequel un mot de délimitation respectif est inséré pour chaque bloc de données, selon les symboles délivrés par le générateur (3).

4. Dispositif de réception de signaux numériques conçu pour exécuter les étapes (e) à (m) du procédé de la revendication 1 ou de la revendication 2, dispositif comportant :
un détecteur (33) pour reconnaître et séparer des signaux numériques reçus le mot respectif délimitant chaque bloc de données, et pour convertir chaque mot séparé en un symbole de la séquence de l'étape (g) ;
un générateur (15) pour générer la séquence pseudo-aléatoire de l'étape (e) ;
des premiers moyens formant mémoire (16) pour mémoriser la séquence de symboles délivrée par ledit détecteur (33), conformément à l'étape (i) ;
des seconds moyens formant mémoire (17) pour mémoriser la séquence de symboles délivrée par ledit générateur (15) conformément à l'étape (h) ;
un corrélateur (18) qui calcule les corrélations de l'étape (1) conformément aux contenus desdits premiers moyens formant mémoire (16) et desdits seconds moyens formant mémoire (17), pour déterminer un type d'erreur; et
des moyens (12, 23) pour resynchroniser les blocs de données dans leur ordre à l'émission, conformément au type d'erreur déterminé par ledit corrélateur (18).
